# EUROPÄISCHE PATENTSCHRIFT

(11) **EP 1 869 744 B1**
(45) Veröffentlichungstag und Bekanntmachung des Hinweises auf die Patenterteilung: **03.09.2014**
(21) Anmeldenummer: 06722783.5
(22) Anmeldetag: 11.04.2006
(51) Int. Cl.: H02G 11/00, F16G 13/16

(54) **LEITUNGSFÜHRUNGSEINRICHTUNG UND SYSTEM BESTEHEND AUS EINER LEITUNGSFÜHRUNGSEINRICHTUNG UND EINER DIESE AUFNEHMENDEN HALTEVORRICHTUNG**
CABLE DRAG SYSTEM COMPRISING A CABLE DRAG DEVICE AND A RETAINING DEVICE RECEIVING THE SAME
DISPOSITIF DE CABLAGE ET SYSTEME COMPRENANT UN DISPOSITIF DE CABLAGE ET UN DISPOSITIF DE RETENUE LOGEANT LEDIT DISPOSITIF DE CABLAGE

(30) Priorität: 11.04.2005 DE 202005005826 U
(43) Veröffentlichungstag der Anmeldung: 26.12.2007
(73) Patentinhaber: igus GmbH, 51147 Köln (DE)
(72) Erfinder: JAEKER, Thilo-Alexander, 53757 Sankt Augustin (DE); HERMEY, Andreas, 53773 Hennef (DE); BLASE, Frank, 51429 Bergisch Gladbach (DE)
(74) Vertreter: Stachow, Ernst-Walther
(86) Internationale Anmeldenummer: PCT/DE2006/000646
(87) Internationale Veröffentlichungsnummer: WO 2006/108401

(56) Entgegenhaltungen:
- EP-A- 0 490 022
- WO-A-97/40289
- WO-A-02/086349
- DE-U1- 20 001 505
- DE-U1- 29 706 670
- DE-U1- 29 802 278

## Beschreibung

Die Erfindung betrifft eine Leitungsführungseinrichtung zur Führung von Energieleitungen, bestehend aus einer Vielzahl von verschwenkbar miteinander verbundenen Gliedern, die jeweils zwei durch eine Querverbindung miteinander verbundene Seitenlaschen aufweisen, wobei die Leitungsführungseinrichtung unter Ausbildung eines Untertrums, eines daran anschließenden Umlenkbereich und eines an den Umlenkbereich anschließenden Obertrums in Längsrichtung der Trume hin- und herbewegbar ist und die Glieder dabei aus einer im wesentlichen linearen Anordnung in den Trumen in eine abgewinkelte Relativstellung im Umlenkbereich und aus dieser wieder in eine im wesentlichen lineare Anordnung verschwenkbar sind. Die Erfindung betrifft weiterhin ein System bestehend aus einer Leitungsführungseinrichtung und einer Haltevorrichtung für das Obertrum der Leitungsführungseinrichtung.

Die Ablage oder Führung des Untertrums einer solchen Leitungsführungseinrichtung geschieht durch Führungsrinnen, die in verschiedenen Konstruktionen bekannt sind, oder, bei kürzeren Verfahrwegen, einfach durch Ablage auf einer flachen Basis. Das Obertrum kann bei kürzeren Verfahrwegen als freistragendes Obertrum ausgebildet sein. Bei längeren Verfahrwegen muss das Obertrum aufgrund seines Gewichts abgestützt werden.

Ist das Obertrum mit einem beweglichen Anschluss verbunden, so dass es sich hin- und herbewegt, legt es sich bei längeren Leitungsführungseinrichtungen auf dem Untertrum ab und gleitet auf diesem, wenn dieses in der jeweiligen Verfahrposition der Leitungsführungseinrichtung eine genügende Länge aufweist. Außerhalb des Untertrums können in dessen Verlängerung Gleitschienen in Höhe des Untertrums angeordnet sein, auf denen das sich über das Untertrum hinaus erstreckende Obertrum gleiten kann. Es gibt jedoch Fälle, in denen das Obertrum im Anschluss an den Umlenkbereich linear in gleicher Höhe verfahrbar angeordnet werden soll. In diesen Fällen ist das hin- und herbewegliche Obertrum abzustützen.

Insbesondere ist eine Abstützung des Obertrums dann erforderlich, wenn dieses über eine größere Länge stationär angeordnet ist und das Untertrum mit einem beweglichen Anschluss verbunden und somit hin- und herverfahrbar ist. In diesem Fall können keine stationären Auflageschienen in Fortsetzung des Untertrums verwendet werden, auf denen sich die Unterseite des Obertrums abstützt.

Es ist daher wünschenswert, eine Leitungsführungseinrichtung der genannten Art so auszubilden, dass sie eine geeignete Abstützung ihres Obertrums in einer geeigneten Haltevorrichtung für das Obertrum erlaubt.

Aus der EP 0 490 022 A1 ist eine Leitungsführungseinrichtung zur Führung von Energieleitungen bekannt, die aus einem biegsamen Bandkabel besteht. Das Bandkabel weist an seinen Seiten in Längsrichtung beabstandete Gleitelemente auf, die in Aufnahmehülsen angeordnet und federbelastet sind. Zur Führung des Bandkabels ist ein unterer Kanal für das Untertrum, ein oberer Kanal für das Obertrum und ein engerer Umlenkkanal für den Umlenkbereich des Bandkabels vorgesehen. Da der Umlenkbereich beim Verfahren des Bandkabels wandern muss, ist der Umlenkkanal mit Hilfe von Gleitklötzen in den Kanälen für das Unter- und Obertrum verschiebbar gelagert.

Im engeren Umlenkkanal sind die Gleitelemente gegen die Federvorspannung in die Aufnahmehülsen hineingedrückt, während sie in den Kanälen für das Unter- und Obertrum durch die Federspannung aus den Aufnahmehülsen herausragen. Wenn zum Beispiel das Obertrum des Bandkabels vom Umlenkbereich weg verfahren wird, werden die am Untertrum angeordneten Gleitelemente durch eine Rampe, die den Übergangsbereich zum engeren Umlenkkanal bildet, in die Aufnahmehülsen hinein gedrückt. Die den Umlenkkanal verlassenden Gleitelemente werden ebenfalls über eine Rampe in den erweiterten Kanal für das Obertrum des Bandkabels geführt, so dass sie aufgrund der Federkraft aus den Aufnahmehülsen heraustreten. Sie legen sich dann auf einem nach innen weisenden Wandbereich des Kanals ab und gleiten auf diesem Bereich. Auf diese Weise wird das Obertrum in gestreckter Lage abgestützt.

Nachteilig bei dieser für ein Bandkabel vorgesehenen Lösung ist, dass die Gleitelemente durch die Federspannung an den Seitenwänden des Umlenkkanals unter Druck anliegen. Dieser behindert durch Reibung das Verfahren des Bandkabels in der Haltevorrichtung und führt zum Verschleiß der Gleitelemente, so dass diese nach einer bestimmten Standzeit ausgewechselt werden müssen, um die Abstützfunktion zu gewährleisten. Weiterhin ist die Verwendung eines an den Umlenkbereich des Bandkabels angepassten Umlenkkanals, der mit Gleitklötzen in den Kanälen für das Unter- und Obertrum verschiebbar gelagert ist, relativ aufwendig.

Eine Leitungsführungseinrichtung der eingangs genannten Art ist aus der DE 36 05 382 A1 bekannt. Die Leitungsführungseinrichtung dient zur Führung von Energieleitungen, die aus einer Vielzahl von verschwenkbar miteinander verbundenen Gliedern bestehen, die jeweils zwei durch eine Querverbindung miteinander verbundene Seitenlaschen aufweisen. Die Leitungsführungseinrichtung ist unter Ausbildung eines Untertrums, eines daran anschließenden Umlenkbereichs und eines an den Umlenkbereich anschließenden Obertrums in Längsrichtung der Trume hin- und herbewegbar. Die Glieder sind dabei aus einer im Wesentlichen linearen Anordnung in den Trumen in eine abgewinkelte Relativstellung im Umlenkbereich und aus dieser wieder in eine im Wesentlichen lineare Anordnung verschwenkbar.

Der vorliegenden Erfindung liegt die Aufgabe zugrunde, eine Leitungsführungseinrichtung bereitzustellen, die eine einfache und verschleißarme Führung des Obertrums und des Untertrums mit sich daran anschließendem Umlenkbereich für die Energieleitungen gewährleistet.

Die Aufgabe wird erfindungsgemäß dadurch gelöst, dass bei einer Leitungsführungseinrichtung der eingangs genannten Art die Seitenlaschen zumindest einiger der Glieder Auflageelemente aufweisen, die zur Abstützung auf einer Haltevorrichtung bei im wesentlichen linearer Relativstellung zu einem benachbarten Glied über die übrigen Bereiche der Außenseite der betreffenden Seitenlasche nach außen vorstehen und bei abgewinkelter Relativstellung zu dem benachbarten Glied nicht über die übrigen Bereiche der Außenseiten der betreffenden Seitenlasche nach außen vorstehen, wobei zum Auflageelement an der Seitenlasche eines Glieds eine Stellvorrichtung an der Seitenlasche des benachbarten Glieds vorgesehen ist, die in kausaler Abhängigkeit von der Relativstellung beider Glieder die genannte Positionierung des Auflageelementes bewirkt.

Aufgrund der erfindungsgemäßen Konstruktion der Leitungsführungseinrichtung kann das Obertrum in einem Kanal mit nach innen vorstehenden Wandbereichen abgelegt und gegebenenfalls geführt werden, auf denen sich die Auflageelemente abstützen. Wandern beim Verfahren der Leitungsführungseinrichtung die Glieder vom Obertrum in den Umlenkbereich, so dass sie eine abgewinkelte Relativstellung zu einem benachbarten Gebiet einnehmen, werden aufgrund der erfindungsgemäßen Maßnahme die in dem genannten Kanal über die Außenseiten der Seitenlaschen vorstehenden Auflageelemente in eine Position gebracht, in der sie nicht über die Außenseiten der Seitenlaschen vorstehen. Somit können die Glieder die durch die nach innen vorstehenden Wandbereiche der Haltevorrichtung gebildete Verengung passieren und in den Umlenkbereich eintreten, ohne dass sie mit einer Reibung durch die Wandbereiche der Haltevorrichtung beaufschlagt werden.

Weiterhin wird durch die erfindungsgemäße Konstruktion ein relativ zum genannten Kanal längs verschiebbarer Umlenkkanal für den Umlenkbereich der Leitungsführungseinrichtung vermieden.

Die Leitungsführungseinrichtung kann aus Gliedern bestehen, die in herkömmlicher Art verschwenkbar miteinander verbunden sind. Die Verschwenkbarkeit kann durch Schwenkachsen an den Gliedern, die z.B. durch Gelenkzapfen und Gelenköffnungen ausgebildet sein können, realisiert sein. Die Glieder können andererseits auch durch eine Schwenkverbindung ermöglichenden Verbindungselemente oder mittels eines durch die Leitungsführungseinrichtung in Längsrichtung durchgehenden Elementes miteinander verbunden sein. Sind die Glieder als Kettenglieder durch Schwenkachsen gelenkig miteinander verbunden, weisen die gegenüberliegenden Seitenlaschen zumindest einiger der Kettenglieder Querstege zur Herstellung eines stabilen Zusammenhalts der Glieder auf.

In einer bevorzugten Weiterbildung der Erfindung sind die Auflageelemente mit in Längsrichtung der Glieder verlaufenden in Schwenkrichtung weisenden Auflagekanten versehen, die bei im wesentlichen linearer Relativstellung des betreffenden Gliedes zu dem benachbarten Glied nach außen vorstehen. Die Auflagekanten stützen sich dann auf den nach innen vorstehenden Wandbereichen des Kanals für das Obertrum der Leitungsführungseinrichtung ab.

In einer vorteilhaften Ausführung der Erfindung sind die Glieder so ausgebildet, dass die Seitenlaschen zweier benachbarter Glieder sich überlappen, wobei die den Überlappungsbereich bildenden Laschenteile eines der Glieder außen und des anderen Gliedes innen angeordnet sind, und die Auflageelemente seitlich nach außen ausstellbare Bereiche der äußeren Laschenteile bilden und die Stellvorrichtungen an der Außenseite der inneren Laschenteile angeordnet sind. Diese Konstruktion ermöglicht ein einfaches Zusammenwirken der Stellvorrichtungen an den inneren Laschenteilen mit den Auflageelementen an den äußeren Laschenteilen im Überlappungsbereich der Glieder.

Zweckmäßigerweise ist die Stellvorrichtung als nach außen weisender Vorsprung ausgebildet, wobei das Auflageelement als Bereich des äußeren Laschenteils und der Vorsprung am inneren Laschenteil so angeordnet sind, dass bei Verschwenkung der Glieder in die im wesentlichen lineare Relativstellung der Vorsprung unter das Auflageelement führbar ist und dieses dabei nach außen stellt.

Das Auflageelement kann als nach außen aufbiegbare Bereich des äußeren Laschenteils ausgebildet sein.

Weiterhin kann der Vorsprung eine Auflauffläche zu seiner ungehinderten Führung unter das Auflageelement aufweisen.

Alternativ oder zusätzlich kann auch das Auflageelement mit einer Auflauffläche für den Vorsprung versehen sein.

In einer bevorzugten Weiterbildung der Erfindung bildet das Auflageelement einen streifenförmigen Randbereich des äußeren Laschenteils, der an einem Ende mit dem übrigen Bereich des äußeren Laschenteils verbunden und sonst von diesem durch einem Schlitz getrennt ist und am anderen Ende die Auflagekante aufweist.

Der das Auflageelement bildende streifenförmige Randbereich kann, wie auch der übrige zur benachbarten Seitenlasche weisende Randbereich des äußeren Laschenteils, teilkreisförmig in der Laschenebene gebogen sein.

Dabei kann das die Auflagekante bildende Ende des streifenförmigen Randbereichs in der mittleren Längsachse der Seitenlasche liegen.

Weiterhin kann das mit dem übrigen Bereich des äußeren Laschenteils verbundene Ende des streifenförmigen Randbereichs im senkrecht zur mittleren Längsachse der Seitenlasche verlaufenden Radius des Teilkreises angeordnet sein.

Bei einer derartigen Ausbildung des Auflageelements ist der Vorsprung bevorzugt als teilkreisförmig gekrümmter Streifen mit in Richtung zur mittleren Längsachse der Seitenlasche ansteigender Auflauffläche ausgebildet.

Weiterhin kann der sich an die Auflagekante des das Auflageelement bildenden streifenförmigen Randbereichs anschließende Randbereich des äußeren Laschenteils an seiner Innenseite eine zur Auflagekante offene Vertiefung aufweisen. Dabei bildet die von der Auflagekante abgewandte Seitenwand der Vertiefung eine Anschlagfläche für den Vorsprung zur Begrenzung der Verschwenkung der benachbarten Glieder in die abgewinkelte Position.

Darüber hinaus können an den inneren Laschen weitere Anschlagflächen angeordnet sein, die mit Anschlägen an der Innenseite der äußeren Laschenteile zur Begrenzung der Verschwenkung der benachbarten Glieder in die im wesentlichen lineare Anordnung und/oder die abgewinkelte Position zusammenwirken.

Die Glieder können gekröpfte Seitenlaschen mit nach innen gekröpften Laschenteilen und nach außen gekröpften Laschenteilen aufweisen. Dabei können die Auflageelemente an den nach außen gekröpften Laschenteilen und die Stellvorrichtungen an den nach innen gekröpften Laschenteilen angeordnet sein.

In einer alternativen Ausführung weisen die Glieder abwechselnd außen angeordnete und innen angeordnete Seitenlaschen auf. Hier können die Auflageelemente an den äußeren und die Stellvorrichtungen an den inneren Seitenlaschen angeordnet sein.

Die Auflageelemente können einstückig mit den Seitenlaschen aus einem dafür geeigneten Material, z.B. Kunststoffmaterial, hergestellt sein. Die Auflageelemente können andererseits auch aus einem anderen Material als demjenigen der Seitenlaschen gefertigt sein, das für ihre Abstütz- und gegebenenfalls Gleitfunktion besonders günstige Materialeigenschaften aufweist, insbesondere Verschleißfestigkeit und einen günstigen Reibungskoeffizienten bezüglich des Materials der Haltevorrichtung. Insbesondere können die Auflageelemente mit den Seitenlaschen im Zweikomponenten-Spritzguss in einer Form hergestellt werden oder durch Anspritzen der Auflageelemente an die schon bereitgestellten Seitenlaschen.

Die der Erfindung zugrunde liegende Aufgabe wird weiterhin durch ein System aus einer Leitungsführungseinrichtung mit den vorstehend beschriebenen konstruktiven Merkmalen und einer Haltevorrichtung für das Obertrum der Leitungsführungseinrichtung gelöst, wobei die Haltevorrichtung einen sich in Längsrichtung des Obertrums erstreckenden Kanal aufweist mit einem ersten Bereich, dessen Breite mit geringem Spiel der Breite der Glieder mit nicht nach außen gestellten Auflageelementen entspricht, und einem darüber angeordneten, stufenförmig verbreiterten zweiten Bereich, dessen Breite mindestens der Breite der Glieder mit nach außen gestellten Auflageelementen entspricht, so dass die Auflageelemente sich auf der Stufe der Verbreiterung auf beiden Seiten der Glieder abstützen.

In einer bevorzugten Weiterbildung nimmt die Haltevorrichtung auch das Untertrum der Leitungsführungseinrichtung auf in einen sich in Längsrichtung des Untertrums erstreckenden Kanal mit unteren nach innen weisenden Wandbereichen, auf denen sich die Glieder des Untertrums zumindest mit seitlichen Bereichen ihrer Unterseite abstützen, und einer Breite, die mindestens der Breite der Glieder mit nach außen gestellten Auflageelementen entspricht.

Die Haltevorrichtung kann als Rinne ausgebildet sein, in die der obere Kanal für das Obertrum und der untere Kanal für das Untertrum integriert sind, wobei der erste Bereich des oberen Kanal sich bis zum unteren Kanal erstreckt und der untere Kanals eine stufenförmige Verbreiterung gegenüber dem ersten Bereich aufweist.

Die Rinne ist bevorzugt als einstückiges Profil, z.B. ein Aluminiumstranggussprofil, ausgebildet.

In einer weiteren bevorzugten Ausgestaltung weist die Haltevorrichtung an ihrer oberen oder unteren Schmalseite eine sich in Längsrichtung erstreckende Öffnung zur Durchführung eines Mitnehmers für das bewegliche Anschlusselement der Leitungsführungseinrichtung auf, der entweder mit einem hin-und herverschiebbaren Untertrum oder mit einem hin- und herverschiebbaren Obertrum der Leitungsführungseinrichtung verbunden ist.

Alternativ kann eine sich in Längsrichtung erstreckende Öffnung zur Durchführung des Mitnehmers auch an geeigneter Stelle in einer Seitenwand der Haltevorrichtung angeordnet sein.

Weiterhin kann die Haltevorrichtung an einer ihrer Schmalseiten, die, falls vorgesehen, der die Öffnung aufweisenden Schmalseite gegenüberliegt, ein Befestigungsteil aufweisen, mit dem die Haltevorrichtung an einer seitlich zu ihr verlaufenden Oberfläche und/oder einer senkrecht dazu verlaufenden Oberfläche der Gesamtkonstruktion befestigbar ist.

In einer bevorzugten Ausbildung weist der zweite Bereich des Kanals für das Obertrum eine Breite auf, die mit geringem Spiel der Breite der Glieder mit nach außen gestellten Aufnahmeelementen entspricht.

Weiterhin kann der Kanal für das Untertrum ebenfalls eine Breite besitzen, die mit geringem Spiel der Breite der Glieder mit nach außen gestellten Aufnahmeelementen entspricht.

Die Höhe des zweiten Bereichs des Kanals für das Obertrum weist mindestens die Höhe der Kettenglieder über der Auflagekante der Auflageelemente auf. Die Höhe des entsprechenden Bereichs des Kanals für das Untertrum weisen ebenfalls eine solche Höhe auf. Die beiden Kanäle müssten in einem Abstand voneinander angeordnet sein, der mindestens dem Durchmesser des bogenförmigen Umlenkbereichs der Leitungsführungseinrichtung entspricht. Vorzugsweise sind der Abstand der beiden Kanäle und der Durchmesser des Umlenkbereichs im Wesentlichen gleich.

Ein Ausführungsbeispiel der Erfindung wird im Folgenden anhand der Zeichnung näher beschrieben. Es zeigen:
Fig. 1a eine perspektivische Ansicht eines Glieds der Leitungsführungseinrichtung,
Fig. 2a eine Seitenansicht des in Figur 1a gezeigten Glieds,
Fig. 3a eine Draufsicht in Richtung des Pfeils A in Figur 2a,
Fig. 4a eine stirnseitige Ansicht der in Figur 2a gezeigten Glieds von links,
Fig. 5a eine stirnseitige Ansicht der in Figur 2a gezeigten Glieds von rechts,

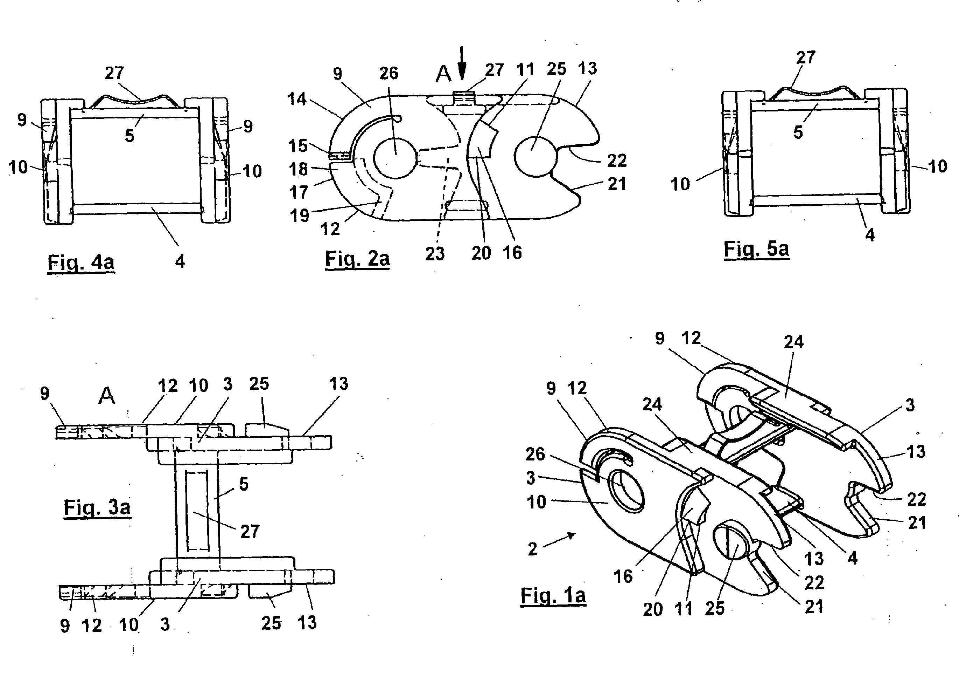

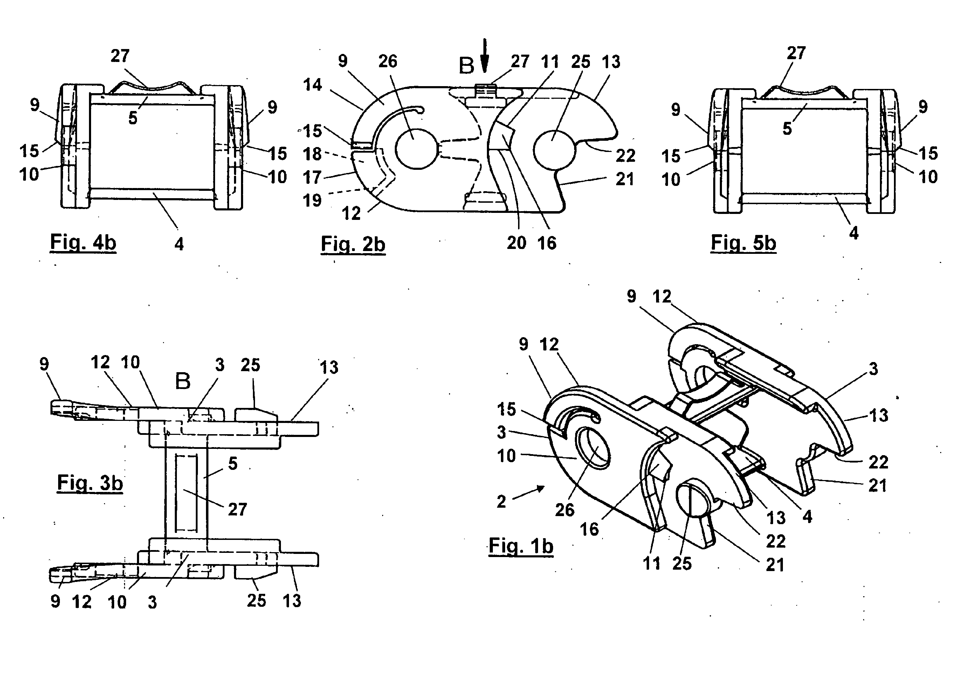

Fig. 1b eine perspektivische Ansicht des in Figur 1a gezeigten Glieds mit nach außen gestellten Auflageelementen,
Fig. 2b eine seitliche Ansicht des in Figur 1b dargestellten Glieds,
Fig. 3b eine Draufsicht in Richtung des Pfeils B in Figur 2b
Fig. 4b eine stirnseitige Ansicht des in Figur 2b gezeigten Glieds von links,
Fig. 5b eine stirnseitige Ansicht des in Figur 2b gezeigten Glieds von rechts

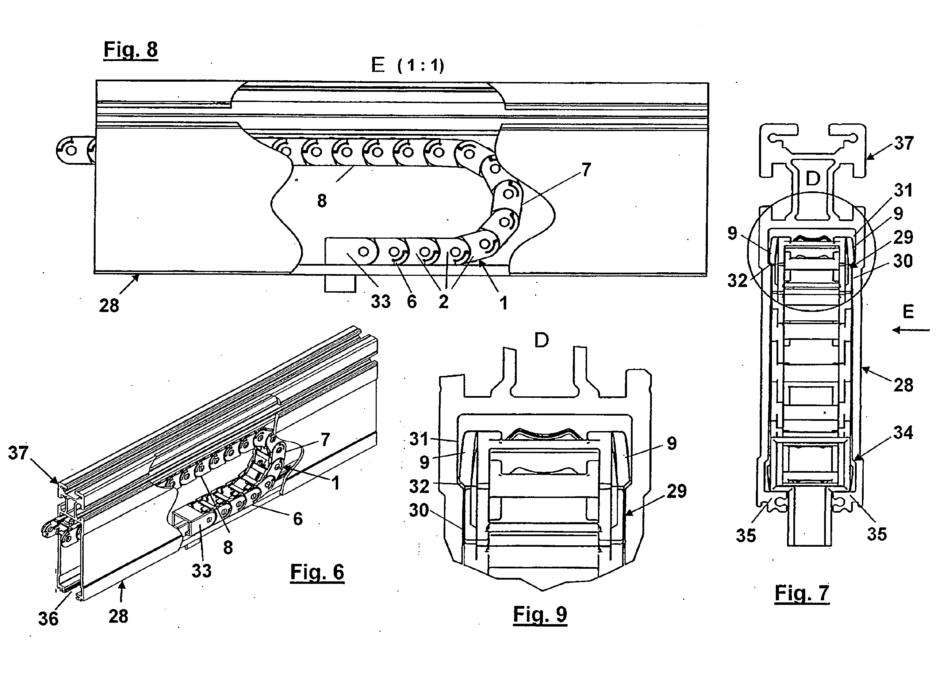

Fig. 6 eine perspektivische Ansicht eines System bestehend aus einer Leitungsführungseinrichtung mit den in den Figuren 1a bis 5b gezeigten Gliedern und einer Haltevorrichtung,
Fig. 7 eine stirnseitige Ansicht des in Figur 6 gezeigten Systems von links,
Fig. 8 eine seitliche Darstellung des in Figur 6 gezeigten Systems und
Fig. 9 einen vergrößerten Ausschnitt des in Figur 7 mit D bezeichneten Bereichs.

Die betrachtete, in den Figuren 6 bis 9 gezeigte Leitungsführungseinrichtung 1 zur Führung von in den Zeichnungen nicht gezeigten Energieleitungen besteht aus einer Vielzahl von verschwenkbar miteinander verbundenen Gliedern 2, wie sie in den Figuren 1a bis 5b dargestellt sind.

Wie aus diesen Figuren hervorgeht, weisen die Glieder 2 jeweils zwei gegenüberliegende Seitenlaschen 3 auf, die durch einen unteren und oberen Quersteg 4 bzw. 5 miteinander verbunden sind.

Wie insbesondere aus den Figuren 6 bis 8 hervorgeht, ist die Leitungsführungseinrichtung 1 unter Ausbildung eines Untertrums 6, eines daran anschließenden Umlenkbereich 7 und eines an den Umlenkbereich 7 anschließenden Obertrums 8 in Längsrichtung der Trume hin- und herbewegbar. Die Glieder 2 sind dabei aus einer im Wesentlichen linearen Anordnung in den Trumen 6 und 8 in eine abgewinkelte Relativstellung im Umlenkbereich 7 und aus dieser wieder in die im wesentlichen lineare Anordnung verschwenkbar.

Zur Abstützung des Obertrums 8 in der mit Abstand und parallel zum Untertrum 6 angeordneten Position der Glieder 2, die weiter unten näher erläutert wird, weisen die Seitenlaschen 3 der Glieder 2 Auflageelemente 9 auf, die bei im wesentlichen linearer Relativstellung zu einem benachbarten Glied über die übrigen Bereiche der Außenseite 10 der betreffenden Seitenlasche 3 nach außen vorstehen und bei abgewinkelter Relativstellung zu dem benachbarten Glied nicht über die übrigen Bereiche der Außenseite 10 der betreffenden Seitenlasche nach außen vorstehen. Diese unterschiedliche Positionierung der Auflageelemente 9 des betreffenden Glieds wird durch Stellvorrichtungen 11 an dem benachbarten Glied in kausaler Abhängigkeit von der Relativstellung der Glieder zueinander bewirkt, wie im Folgenden näher beschrieben wird.

In den Figuren 1a bis 5a ist ein Glied 2 dargestellt, bei dem die Auflageelemente 9 nicht durch die Stellvorrichtung des benachbarten Glieds nach außen gestellt sind, während in den Figuren 1b bis 5b dieses Glied 2 mit Auflageelementen 9 dargestellt ist, die durch die Stellvorrichtungen des benachbarten Glieds nach außen gestellt sind.

Wie aus den Figuren 1a bis 5b hervorgeht, sind die Glieder 2 der hier betrachteten Leitungsführungseinrichtung 1 so gestaltet, dass die Seitenlaschen 3 zweier benachbarter Glieder sich überlappen, wobei die den Überlappungsbereich bildenden Laschenteile eines der Glieder 2 außen und des anderen Gliedes innen angeordnet sind. Die Auflageelemente 9 bilden seitlich nach außen ausstellbare Bereiche der äußeren Laschenteile 12, während die Stellvorrichtungen 11 an der Außenseite der inneren Laschenteile 13 angeordnet sind.

Wie in den Figuren 1a bis 5b gezeigt ist, ist die Stellvorrichtung 11 als nach außen weisender Vorsprung ausgebildet, wobei das Auflageelement 9 als Bereich des äußeren Laschenteils 12 und der Vorsprung am inneren Laschenteil 13 so angeordnet sind, dass bei Verschwenkung der Glieder in die im wesentlichen lineare Relativstellung der Vorsprung, d.h. die Stellvorrichtung 11, unter das Auflageelement 9 führbar ist und dieses dabei nach außen stellt.

Wie insbesondere aus den Figuren 1a und 2a sowie 1b und 2b hervorgeht, bildet das Auflageelement einen streifenförmigen Randbereich 14 des äußeren Laschenteils 12, der teilkreisförmig in der Laschenebene gekrümmt ist. Der Randbereich 14 ist an einem Ende mit dem übrigen Bereich des äußeren Laschenteils 12 verbunden und sonst von diesem durch einen Schlitz getrennt. An seinem anderen Ende weist er eine Auflagekante 15 auf. Die Auflagekante 15 kann eine leichte nach außen weisende Schräge 16 und eine leichte nach innen weisende Schräge aufweisen.

Der das Auflageelement 5 bildende Randbereich entspricht in seiner Krümmung dem übrigen zur benachbarten Seitenlasche weisenden Randbereich des äußeren Laschenteils 12.

Das die Auflagekante 15 bildende Ende des streifenförmigen Randbereichs verläuft in der mittleren Längsachse der Seitenlasche 3, während das andere, mit dem übrigen Bereich des äußeren Laschenteil 12 verbundene Ende des streifenförmigen Randbereichs etwa im senkrecht zur mittleren Längsachse der Seitenlasche 3 verlaufenden Radius des Teilkreises angeordnet ist.

Der als Stellvorrichtung 11 dienende Vorsprung ist ebenfalls als teilkreisförmig gekrümmter Streifen mit einer in Richtung zur mittleren Längsachse der Seitenlasche ansteigender Auflauffläche 16 ausgebildet.

Wie insbesondere aus den Figuren 1a und 1b hervorgeht, weisen die Glieder 2 gekröpfte Seitenlaschen 3 mit nach innen gekröpften Laschenteilen 13 und nach außen gekröpften Laschenteilen 12 auf. Die mit der Auflauffläche 16 versehenen Vorsprünge, d.h. die Stellvorrichtungen 11, sind an der Außenseite des nach innen gekröpften Laschenteils 13 am stufenförmigen Übergang zu dem nach außen gekröpften Laschenteil 12 angeordnet. Wie ebenfalls den Figuren 2a und 2b zu entnehmen ist, weist der sich an die Auflagekante 15 des das Auflageelement 9 bildenden streifenförmigen Randbereichs anschließende Randbereich 17 des äußeren Laschenteils 12 an seiner Innenseite eine zur Auflagekante 15 offene Vertiefung 18 auf. Die von der Auflagekante 15 abgewandte Seitenwand 19 der Vertiefung 18 bildet eine Anschlagfläche für den Vorsprung, d.h. die Stellvorrichtung 11, zur Begrenzung der Verschwenkung der benachbarten Glieder in die abgewinkelte Position. Der Vorsprung wirkt mit seiner die höchste Linie der Auflauffläche 16 einschließenden Seitenwand 20 mit der Seitenwand 19 der Vertiefung 18 zusammen.

Darüber hinaus sind an den inneren Laschenteilen 13 Anschlagflächen 21 und 22 angeordnet, die mit Anschlägen 23 an der Innenseite der äußeren Laschenteile 12 zur Begrenzung der Verschwenkung der benachbarten Glieder in die im wesentlichen lineare Anordnung bzw. die abgewinkelte Position zusammenwirken.

Wie z.B. aus Figur 1a hervorgeht, weisen die Seitenlaschen 3 der Glieder 2 integrierte Gleitkufen 24 zur Verschleiß- und Geräuschverminderung bei der Ablage und gegebenenfalls dem Gleiten des Untertrums 6 in einer Führungsvorrichtung auf. Die Gleitkufen 24 können einstückig mit der Seitenlasche 3 hergestellt sein. Sie können auch aus einem anderen Kunststoffmaterial mit besonderen verschleißfesten und geräuschdämpfenden Materialeigenschaften bestehen und an die Seitenlaschen 3 angespritzt sein. Insbesondere können die Gleitkufen 24 und Seitenlaschen 3 durch Zweikomponentenspritzguss in einer Form hergestellt werden.

Die in den Figuren 1a und 5b gezeigten Glieder zeichnen sich durch eine leichte und einfache Konstruktion aus. Die Schwenkverbindungen zwischen benachbarten Gliedern 2 sind durch Gelenkzapfen 25 und Gelenköffnungen 26 gebildet. Die beiden Seitenlaschen 3 sind durch den unteren Quersteg 4 einstückig miteinander verbunden. Der obere Quersteg kann ebenfalls eine einstückige Querverbindung bilden. Alternativ kann er auf übliche Weise zu öffnen sein, oder zum einfachen Einlegen der Kabel unterbrochen sein.
Als zusätzliche Sicherung gegen Lösen der Gelenkverbindung können die Gelenkzapfen 26 und Gelenköffnungen 26 eine lösbare Rastverbindung aufweisen.

Bei dem in den Figuren 1a bis 5a gezeigten Ausführungsbeispiel eines Glieds 2 weist der obere Quersteg 5 ferner ein elastisches Federelement 27 auf, das über die Oberseite der Seitenlasche 3 hinaus vorsteht. Das Federelement 27 dient als Dämpfungselement bei der Ablage der aus dem Umlenkbereich 7 in das Untertrum 6 tretenden Glieder 2.

In den Figuren 6 bis 9 ist nun gezeigt, wie die Leitungsführungseinrichtung 1 aus den vorstehend beschriebenen Gliedern 2 in einer geeigneten Haltevorrichtung 28 abgelegt und geführt wird. Wie aus den Figuren hervorgeht, weist die Haltevorrichtung 28 einen sich in Längsrichtung des Obertrums 8 der Leitungsführungseinrichtung 1 erstreckenden Kanal 29 auf mit einem ersten Bereich 30, dessen Breite mit geringem Spiel der Breite der Glieder mit nicht nach außen gestellten Auflageelementen 9 entspricht, und einem darüber angeordneten stufenartig verbreiterten zweiten Bereich 31, dessen Breite ebenfalls mit geringem Spiel der Breite der Glieder 2 mit nach außen gestellten Auflageelementen 9 entspricht. Die nach außen gestellten Auflageelemente 9 stützen sich auf der Stufe 32 der Verbreiterung auf beiden Seiten der Glieder 2 ab.

Bei dem in den Figuren 6 bis 9 gezeigten System aus einer Leitungsführungseinrichtung 1 und einer Haltevorrichtung 28 ist das Obertrum 8 mit einem in der Zeichnung nicht dargestellten stationären Anschluss verbunden, während das Untertrum 6 mit einem beweglichen Anschluss 33 verbunden ist. Wird das Untertrum 6 über den beweglichen Anschluss 33 vom Umlenkbereich 7 weg verfahren, verschwenken sich die an den Umlenkbereich 7 anschließenden Glieder 2 des Obertrums 8 in den Umlenkbereich 7 hinein. Beim Verschwenken dieser Glieder 2 in die abgewinkelte Relativstellung zu den benachbarten Gliedern werden die Stellvorrichtungen 11 aus den Bereichen der Auflageelemente 9 herausgeschwenkt, so dass die Auflageelemente 9 durch ihre elastische Rückstellkraft in die nicht nach außen gestellte Position zurückkehren. Dadurch können die Glieder 2 aus dem breiteren zweiten Bereich 31 in den ersten engeren Bereich 30 des Kanals 29 für das Obertrum 8 eintreten.

Umgekehrt treten bei der beschriebenen Bewegung die an das Untertrum 6 angrenzenden Glieder 2 des Umlenkbereichs in einen sich in Längsrichtung des Untertrum 6 erstreckenden Kanal 34 der Haltevorrichtung 28 ein. Da die Glieder 2 dabei aus der abgewinkelten Position in die im Wesentlichen lineare Anordnung geschwenkt werden, werden die Auflageelemente 9 entlang der Auflauffläche 16 der Stellvorrichtung 11 nach außen gestellt, so dass sie über die seitlichen Außenflächen 10 der Seitenlaschen vorstehen. Daher ist der Kanal 34 für das Untertrum 6 mit einer Breite ausgebildet, die mit geringem Spiel der Breite der Glieder 2 mit nach außen gestellten Auflageelemente 9 entspricht.

Der das Untertrum 6 aufnehmende Kanal 34 ist mit unteren, nach innen weisenden Wandbereichen 35 versehen, auf denen sich die Glieder 2 des Untertrums 6 mit seitlichen Bereichen ihrer Unterseite abstützen.

Wie aus den Figuren 6 bis 9 hervorgeht, ist die Führungsvorrichtung 28 als Profil, z.B. als Aluminiumstranggussprofil, ausgebildet, in das der obere Kanal 29 für das Obertrum 8 und der untere Kanal 34 für das Untertrum 6 integriert sind. Dabei erstreckt sich der erste Bereich 30 des oberen Kanals 29 bis zum unteren Kanal 34, so dass der untere Kanal 34 eine stufenförmige Verbreiterung gegenüber dem ersten Bereich 30 aufweist.

Zur Durchführung der Kabel und Verbindung eines Mitnehmers mit dem beweglichen Anschluss 33 weist die untere Schmalseite der Haltevorrichtung 28 eine sich zwischen den Wandbereichen 35 über deren gesamte Länge erstreckende Öffnung 36 auf.

An der der Öffnung 36 gegenüberliegenden Schmalseite weist die Haltevorrichtung 28 ein Befestigungsteil 37 auf, mit dem die Haltevorrichtung 28 an beiden Seiten an einer seitlich zu ihr verlaufenden oder einer senkrecht dazu verlaufenden, in der Zeichnung nicht dargestellten Oberfläche der Gesamtkonstruktion befestigbar ist.

Die Unterseite der Haltevorrichtung 28 kann weiterhin ein Führungsprofil für einen mit dem Untertrum 6 der Leitungsführungseinrichtung 1 verbundenen, in der Zeichnung nicht dargestellten Wagen zum Verfahren der Leitungsführungseinrichtung 1 aufweisen.

### Bezugzeichenliste

1 Leitungsführungseinrichtung
2 Glied
3 Seitenlasche
4 unterer Quersteg
5 oberer Quersteg
6 Untertrum
7 Umlenkbereich
8 Obertrum
9 Auflageelement
10 Außenseite
11 Stellvorrichtung
12 äußeres Laschenteil
13 inneres Laschenteil
14 Randbereich
15 Auflagekante
16 Auflauffläche
17 Randbereich
18 Vertiefung
19 Seitenwand
20 Seitenwand
21 Anschlagfläche
22 Anschlagfläche
23 Anschlag
24 Gleitkufe
25 Gelenkzapfen
26 Gelenköffnung
27 Federelement
28 Haltevorrichtung
29 Kanal
30 erster Bereich
31 zweiter Bereich
32 Stufe
33 beweglicher Anschluss
34 Kanal
35 Wandbereiche
36 Öffnung
37 Befestigungsteil

## Patentansprüche

1. Leitungsführungseinrichtung (1) zur Führung von Energieleitungen, bestehend aus einer Vielzahl von verschwenkbar miteinander verbundenen Gliedern (2), die jeweils zwei durch eine Querverbindung miteinander verbundene Seitenlaschen (3) aufweisen, wobei die Leitungsführungseinrichtung (1) unter Ausbildung eines Untertrums (6), eines daran anschließenden Umlenkbereichs (7) und eines an den Umlenkbereich (7) anschließenden Obertrums (8) in Längsrichtung der Trume hin- und herbewegbar ist und die Glieder (2) dabei aus einer im wesentlichen linearen Anordnung in den Trumen (6, 8) in eine abgewinkelte Relativstellung im Umlenkbereich (7) und aus dieser wieder in eine im wesentlichen lineare Anordnung verschwenkbar sind, **dadurch gekenn zeichnet,** dass die Seitenlaschen (3) zumindest einiger Glieder (2) Auflageelemente (9) aufweisen, die zur Abstützung auf einer Haltevorrichtng bei im wesentlichen linearer Relativstellung zu einem benachbarten Glied über die übrigen Bereiche der Außenseite (10) der betreffenden Seitenlasche (3) nach außen vorstehen und bei abgewinkelter Relativstellung zu dem benachbarten Glied nicht über die übrigen Bereiche der Außenseite (10) der betreffenden Seitenlasche (3) nach außen vorstehen, wobei zum Auflageelement (9) an der Seitenlasche (3) eines Glieds eine Stellvorrichtung (11) an der Seitenlasche (3) des benachbarten Glieds vorgesehen ist, die in kausaler Abhängigkeit von der Relativstellung beider Glieder die genannte Positionierung des Auflageelementes (9) bewirkt.

2. Leitungsführungseinrichtung nach Anspruch 1, **dadurch gekennzeichnet, dass** die Auflageelemente (9) eine in Längsrichtung der Glieder verlaufende in Schwenkrichtung weisende Auflagekante (15) aufweisen, die bei im wesentlichen linearer Relativstellung des betreffenden Glieds (2) zu dem benachbarten Glied nach außen vorsteht.

3. Leitungsführungseinrichtung nach Anspruch 1 oder 2, **dadurch gekennzeichnet, dass** die Seitenlaschen (3) zweier benachbarter Glieder sich überlappen, wobei die den Überlappungsbereich bildenden Laschenteile eines der Glieder außen und des anderen Gliedes innen angeordnet sind, und die Auflageelemente (9) seitlich nach außen ausstellbare Bereiche der äußeren Laschenteile (12) bilden, und die Stellvorrichtungen (11) an der Außenseite der inneren Laschenteile (13) angeordnet sind.

4. Leitungsführungseinrichtung nach Anspruch 3, **dadurch gekennzeichnet, dass** die Stellvorrichtung (11) als nach außen weisender Vorsprung ausgebildet ist, wobei das Auflageelement (9) als Bereich des äußeren Laschenteils (12) und der Vorsprung am inneren Laschenteil (13) so angeordnet sind, dass bei Verschwenkung der Glieder (2) in die im wesentlichen lineare Relativstellung der Vorsprung unter das Auflageelement (9) führbar ist und dieses dabei nach außen stellt.

5. Leitungsführungseinrichtung nach Anspruch 3 oder 4, **dadurch gekennzeichnet, dass** das Auflageelement (9) als nach außen aufbiegbarer Bereich des äußeren Laschenteils (12) ausgebildet ist.

6. Leitungsführungseinrichtung nach Anspruch 4 oder 5, **da-** d u r c h **gekennzeichnet**, dass der Vorsprung eine Auflauffläche (16) für das Auflageelement (9) aufweist.

7. Leitungsführungseinrichtung nach Anspruch 5 oder 6, **da-** d u r c h **gekennzeichnet**, dass das Auflageelement (9) einen streifenförmigen Randbereich des äußeren Laschenteils (12) bildet, der an einem Ende mit dem übrigen Bereich des äußeren Laschenteils (12) verbunden und sonst von diesem durch einen Schlitz getrennt ist und am anderen Ende die Auflagekante (15) aufweist.

8. Leitungsführungseinrichtung nach Anspruch 7, **dadurch gekennzeichnet, dass** der das Auflageelement (9) bildende streifenförmige Randbereich, wie der übrige zur benachbarten Seitenlasche weisende Randbereich des äußeren Laschenteils (12), teilkreisförmig in der Laschenebene gekrümmt ist.

9. Leitungsführungseinrichtung nach Anspruch 8, **dadurch gekennzeichnet, dass** das die Auflagekante (15) bildende Ende des steifenförmigen Bereichs in der mittleren Längsachse der Seitenlasche (3) verläuft.

10. Leitungsführungseinrichtung nach Anspruch 8 oder 9, **dadurch gekennzeichnet, dass** das mit dem übrigen Bereich des äußeren Laschenteils (12) verbundene Ende des das Auflageelement (9) bildenden streifenförmigen Randbereichs im senkrecht zur mittleren Längsachse der Seitenlasche (3) verlaufenden Radius des Teilkreises angeordnet ist.

11. Leitungsführungseinrichtung nach einem der Ansprüche 8 bis 10, **dadurch gekennzeichnet, dass** der Vorsprung als teilkreisförmig gekrümmter Streifen mit in Richtung zur mittleren Längsachse der Seitenlasche (3) ansteigender Auflauffläche (16) ausgebildet ist.

12. Leitungsführungseinrichtung nach einem der Ansprüche 7 bis 11, **dadurch gekennzeichnet, dass** der sich an die Auflagekante (15) des das Auflageelement (9) bildenden streifenförmigen Randbereichs anschließende Randbereich (17) des äußeren Laschenteils (12) an seiner Innenseite eine zur Auflagekante (15) offene Vertiefung (18) aufweist, wobei die von der Auflagekante (15) abgewandte Seitenwand (19) der Vertiefung (18) eine Anschlagfläche für den Vorsprung zur Begrenzung der Verschwenkung der benachbarten Glieder (2) in die abgewinkelte Position bildet.

13. Leitungsführungseinrichtung nach einem der Ansprüche 3 bis 12, **dadurch gekennzeichnet, dass** an den inneren Laschenteilen (13) Anschlagflächen (21, 22) angeordnet sind, die mit Anschlägen (23) an der Innenseite der äußeren Laschenteile (12) zur Begrenzung der Verschwenkung der benachbarten Glieder (2) in die im wesentlichen lineare Anordnung und/oder die abgewinkelte Position zusammenwirken.

14. Leitungsführungseinrichtung nach einem der Ansprüche 1 bis 13, **dadurch gekennzeichnet, dass** die Glieder (2) gekröpfte Seitenlaschen (3) mit nach innen gekröpften Laschenteilen (13) und nach außen gekröpften Laschenteilen (12) aufweisen und die Auflageelemente (9) an den nach außen gekröpften Laschenteilen (12) und die Stellvorrichtungen (11) an den nach innen gekröpften Laschenteilen (13) angeordnet sind.

15. Leitungsführungseinrichtungen nach einem der Ansprüche 1 bis 13, **dadurch gekennzeichnet, dass** die Glieder (2) abwechselnd außen angeordnete Außenlaschen und innen angeordnete Innenlaschen aufweisen und die Auflageelemente (9) an den Außenlaschen und die Stellvorrichtungen (11) an den Innenlaschen angeordnet sind.

16. System aus einer Leitungsführungseinrichtung (1) nach einem der Ansprüche 1 bis 15 und einer Haltevorrichtung (28) für das Obertrum (8) der Leitungsführungseinrichtung (1), **dadurch gekennzeichnet, dass** die Haltevorrichtung(28) einen sich in Längsrichtung des Obertrums (8) erstreckenden Kanal (29) aufweist mit einem ersten Bereich (30), dessen Breite mit geringem Spiel der Breite der Glieder (2) mit nicht nach außen gestellten Auflageelementen (9) entspricht, und einem darüber angeordneten stufenartig verbreiterten zweiten Bereich (31), dessen Breite mindestens der Breite der Glieder (2) mit nach außen gestellten Auflageelementen (9) entspricht, so dass die Auflageelemente (9) auf der Stufe (32) der Verbreiterung auf beiden Seiten der Glieder (2) abstützbar sind.

17. System nach Anspruch 16, **dadurch gekenn**z e i c h n e t, dass die Haltevorrichtung (28) auch das Untertrum (6) der Leitungsführungseinrichtung (1) aufnimmt in einem sich in Längsrichtung des Untertrums (6) erstreckenden Kanal (34) mit unteren nach innen weisenden Wandbereichen (35), auf denen sich die Glieder (2) des Untertrums (6) zumindest mit seitlichen Bereichen ihrer Unterseite abstützen, und einer Breite, die mindestens der Breite der Glieder (2) mit nach außen gestellten Auflageelementen (9) entspricht.

18. System nach Anspruch 17, **dadurch gekennzeichnet, dass** die Haltevorrichtung (28) als Rinne ausgebildet ist, in die der obere Kanal (29) für das Obertrum (8) und der untere Kanal (34) für das Untertrum (6) integriert sind, wobei der erste Bereich (30) des oberen Kanals (29) sich bis zum unteren Kanal (34) erstreckt und der untere Kanal (34) eine stufenförmige Verbreiterung gegenüber dem ersten Bereich (30) aufweist.

19. System nach Anspruch 18, **dadurch gekennzeichnet, dass** die Haltevorrichtung (28) als einstückiges Profil ausgebildet ist.

20. System nach Anspruch 18 oder 19, **dadurch gekennzeichnet, dass** die Haltevorrichtung (28) an ihrer oberen oder unteren Schmalseite eine sich in Längsrichtung erstreckende Öffnung (36) zur Durchführung eines Mitnehmers für den beweglichen Anschluss (33) der Leitungsführungseinrichtung (1) aufweist, der entweder mit einem hin- und herverschiebbaren Untertrum (6) oder mit einem hin- und herverschiebbaren Obertrum (8) der Leitungsführungseinrichtung (1) verbunden ist.

21. System nach Anspruch 20, **dadurch gekennzeichnet, dass** die Haltevorrichtung (28) an der Schmalseite, die der die Öffnung (36) aufweisenden Schmalseite gegenüberliegt, ein Befestigungsteil (37) aufweist, mit dem die Führungsvorrichtung (28) an einer seitlich zu ihr verlaufenden Oberfläche und/oder einer senkrecht dazu verlaufenden Oberfläche befestigbar ist.

22. System nach einem der Ansprüche 16 bis 21, **dadurch gekennzeichnet, dass** der zweite Bereich (31) des Kanals (29) für das Obertrum (8) eine Breite aufweist, die mit geringem Spiel der Breite der Glieder (2) mit nach außen gestellten Aufnahmeelemente (9) entspricht.

23. System nach einem der Ansprüche 17 bis 22, **dadurch gekennzeichnet, dass** der Kanal 34 für das Untertrum (6) eine Breite besitzt, die mit geringem Spiel der Breite der Glieder (2) mit nach außen gestellten Aufnahmelementen (9) entspricht.

## Claims

1. Cable drag device (1) for guiding energy lines, comprising a plurality of members (2) connected to each other in pivoting fashion, each of which displays two side bars (3) connected to each other by a cross-connection, where the cable drag device (1) can be moved back and forth, forming a lower strand (6), a deflection zone (7) following on therefrom, and an upper strand (8) following on from the deflection zone (7), in the longitudinal direction of the strands, and the members (2) can in this context be pivoted out of an essentially linear arrangement in the strands (6, 8) into an angled relative position in the deflection zone (7), and from this position back into an essentially linear arrangement, **characterized** i n t h a t the side bars (3) of at least some members (2) display supporting elements (9) that, for support on a retaining device, project outwards beyond the remaining areas of the outer face (10) of the side bar (3) in question when in an essentially linear position relative to an adjacent member, and do not project outwards beyond the remaining areas of the outer face (10) of the side bar (3) in question when in an angled position relative to the adjacent member, where, towards the supporting element (9) on the side bar (3) of a member, an adjusting device (11) is provided on the side bar (3) of the adjacent member that effects the aforementioned positioning of the supporting element (9) as a causal function of the relative position of both members.

2. Cable drag device according to Claim 1, **characterized in that** the supporting elements (9) display a supporting edge (15), running in the longitudinal direction of the members and facing in the direction of pivoting, that projects outwards when the member (2) in question is in an essentially linear position relative to the adjacent member.

3. Cable drag device according to Claim 1 or 2, **characterized in that** the side bars (3) of two adjacent members overlap, where the bar segments forming the overlapping area are located on the outside on one of the members and on the inside on the other member, and the supporting elements (9) form areas of the outer bar segments (12) that can be laterally extended outwards, and the adjusting devices (11) are located on the outer face of the inner bar segments (13).

4. Cable drag device according to Claim 3, **characterized** i**n that** the adjusting device (11) is designed as an outward-facing projection, where the supporting element (9), as an area of the outer bar segment (12), and the projection on the inner bar segment (13) are arranged in such a way that, when the members (2) are pivoted into the essentially linear relative position, the projection can be guided under the supporting element (9), extending it outwards in the process.

5. Cable drag device according to Claim 3 or 4, **characterized in that** the supporting element (9) is designed as an outwardly bendable area of the outer bar segment (12).

6. Cable drag device according to Claim 4 or 5, **characterized in that** the projection displays a run-up surface (16) for the supporting element (9).

7. Cable drag device according to Claim 5 or 6, **characterized in that** the supporting element (9) forms a strip-like edge area of the outer bar segment (12), which is connected to the remaining area of the outer bar segment (12) at one end, otherwise being separated from it by a slit, and displays the supporting edge (15) at the other end.

8. Cable drag device according to Claim 7, **charact e r i z e d i n t h a t** the strip-like edge area forming the supporting element (9) is, like the remaining edge area of the outer bar segment (12) facing the adjacent side bar, curved in the manner of a reference circle in the bar plane.

9. Cable drag device according to Claim 8, **characterized in that** the end of the strip-like edge area forming the supporting edge (15) lies in the center longitudinal axis of the side bar (3).

10. Cable drag device according to Claim 8 or 9, **characterized in that** the end of the strip-like edge area forming the supporting element (9) that is connected to the remaining area of the outer bar segment (12) is located in the radius of the reference circle running perpendicularly to the center longitudinal axis of the side bar (3).

11. Cable drag device according to one of Claims 8 to 10, **characterized in that** the projection is designed as a strip that is curved in the manner of a reference circle and has a run-up surface (16) rising towards the center longitudinal axis of the side bar (3).

12. Cable drag device according to one of Claims 7 to 11, **characterized in that** the edge area (17) of the outer bar segment (12) following on from the supporting edge (15) of the strip-like edge area forming the supporting element (9) displays, on its inner face, a recess (18) open towards the supporting edge (15), where the side wall (19) of the recess (18) facing away from the supporting edge (15) forms a stop face for the projection to limit the pivoting of adjacent members (2) into the angled position.

13. Cable drag device according to one of Claims 3 to 12, **characterized in that** stop faces (21, 22) are located on the inner bar segments (13), interacting with stops (23) on the inner face of the outer bar segments (12) to limit the pivoting of adjacent members (2) into the essentially linear arrangement and/or the angled position.

14. Cable drag device according to one of Claims 1 to 13, **characterized in that** the members (2) display cranked side bars (3) with inwardly cranked bar segments (13) and outwardly cranked bar segments (12), and the supporting elements (9) are located on the outwardly cranked bar segments (12), and the adjusting devices (11) on the inwardly cranked bar segments (13).

15. Cable drag device according to one of Claims 1 to 13, **characterized in that** the members (2) alternately display outer bars located on the outside and inner bars located on the inside, and the supporting elements (9) are located on the outer bars and the adjusting devices (11) on the inner bars.

16. System comprising a cable drag device (1) according to one of Claims 1 to 15 and a retaining device (28) for the upper strand (8) of the cable drag device (1), **characterized in that** the retaining device (28) displays a channel (29), extending in the longitudinal direction of the upper strand (8), having a first area (30) whose width corresponds, with slight play, to the width of the members (2) with non-extended supporting elements (9), and a second area (31) located above it that is widened in stepped fashion and whose width corresponds at least to the width of the members (2) with outwardly extended supporting elements (9), such that the supporting elements (9) can be supported on the step (32) of the wider area on both sides of the members (2).

17. System according to Claim 16, **characterized** i n t h a t the retaining device (28) also receives the lower strand (6) of the cable drag device (1) in a channel (34) that extends in the longitudinal direction of the lower strand (6) and displays lower, inward-facing wall areas (35), on which the members (2) of the lower strand (6) are supported, at least on lateral areas of their underside, and a width corresponding at least to the width of the members (2) with outwardly extended supporting elements (9).

18. System according to Claim 17, **characterized in that** the retaining device (28) is designed as a trough, into which the upper channel (29) for the upper strand (8) and the lower channel (34) for the lower strand (6) are integrated, where the first area (30) of the upper channel (29) extends up to the lower channel (34), and the lower channel (34) is widened in stepped fashion compared to the first area (30).

19. System according to Claim 18, **characterized in that** the retaining device (28) is designed as a one-piece section.

20. System according to Claim 18 or 19, **character- ized in that** the retaining device (28) displays, on its upper or lower narrow face, an opening (36) extending in the longitudinal direction for passing through a catch for the moving connection (33) of the cable drag device (1), which is connected either to a lower strand (6) of the cable drag device (1) that can be moved back and forth, or to an upper strand (8) of the cable drag device (1) that can be moved back and forth.

21. System according to Claim 20, **characterized in that** the retaining device (28) displays, on the narrow face opposite the narrow face displaying the opening (36), a fastening element (37), by means of which the retaining device (28) can be fastened on a surface running laterally to it and/or a surface running perpendicularly thereto.

22. System according to one of Claims 16 to 21, **characterized in that** the second area (31) of the channel (29) for the upper strand (8) displays a width which, with slight play, corresponds to the width of the members (2) with outwardly extended supporting elements (9).

23. System according to one of Claims 17 to 22, **characterized in th**at the channel (34) for the lower strand (6) displays a width which, with slight play, corresponds to the width of the members (2) with outwardly extended supporting elements (9).

## Revendications

1. Installation de guidage de conduites (1) pour le guidage de conduites d'énergie composées d'une pluralité de maillons (2) reliés entre eux de façon pivotante, qui présentent chacun deux pattes latérales (3) reliées entre elles par une liaison transversale, l'installation de guidage de conduites (1) pouvant être déplacée en va-et-vient, en formant un brin inférieur (6), une zone de renvoi (7) faisant suite à celui-ci et un brin supérieur (8) faisant suite à la zone de renvoi (7), dans le sens longitudinal des brins et les maillons (2) pouvant alors pivoter d'une disposition sensiblement linéaire dans les brins (6, 8) à une position relative angulée dans la zone de renvoi (7) et revenir de celle-ci dans une disposition sensiblement linéaire, **caractérisée en ce que** les pattes latérales (3) d'au moins quelques maillons (2) présentent des éléments d'appui (9) qui dépassent en vue de l'appui sur un dispositif de maintien, quand la position relative est sensiblement linéaire par rapport à un maillon voisin, vers l'extérieur au-delà des autres parties du côté extérieur (10) de la patte latérale (3) concernée et, dans la position relative angulée par rapport au maillon voisin, ne dépassent pas vers l'extérieur au-delà des autres parties du côté extérieur (10) de la patte latérale (3), un dispositif de réglage (11) étant prévu vers l'élément d'appui (9) sur la patte latérale (3) d'un maillon sur la patte latérale (3) du maillon voisin, qui réalise ledit positionnement de l'élément d'appui (9) suivant une relation de cause à effet avec la position relative des deux maillons.

2. Installation de guidage de conduites selon la revendication 1, **caractérisée en ce que** les éléments d'appui (9) présentent un bord d'appui (15) orienté dans le sens de pivotement dans le sens longitudinal des maillons, qui dépasse vers l'extérieur en direction du maillon voisin dans la position relative sensiblement linéaire du maillon (2) considéré.

3. Installation de guidage de conduites selon la revendication 1 ou 2, **caractérisée en ce que** les pattes latérales (3) de deux maillons voisins se chevauchent, les parties de patte d'un maillon qui forment la zone de chevauchement étant disposées sur l'extérieur et celles de l'autre maillon sur l'intérieur, et les éléments d'appui (9) formant des zones des parties de patte extérieures (12) pouvant être écartées vers l'extérieur, et les dispositifs de réglage (11) étant disposés sur la face extérieure des parties de patte intérieures (13).

4. Installation de guidage de conduites selon la revendication 3, **caractérisée en ce que** le dispositif de réglage (11) est conformé comme une saillie orientée vers l'extérieur, l'élément d'appui (9) étant disposé comme une zone de la partie de patte extérieure (12) et la saillie sur la partie de patte intérieure (13) de telle manière que lors du pivotement des maillons (2) dans la position relative sensiblement linéaire, la saillie puisse passer sous l'élément d'appui (9) et celui-ci s'oriente alors vers l'extérieur.

5. Installation de guidage de conduites selon la revendication 3 ou 4, **caractérisée en ce que** l'élément d'appui (9) est conformé comme une zone de la partie de patte extérieure (12) pouvant être pliée vers l'extérieur.

6. Installation de guidage de conduites selon la revendication 4 ou 5, **caractérisée en ce que** la saillie présente une surface de contact (16) pour l'élément d'appui (9).

7. Installation de guidage de conduites selon la revendication 5 ou 6, **caractérisée en ce que** l'élément d'appui (9) forme une zone de bord en forme de bande de la partie de patte extérieure (12), qui est reliée à une extrémité au reste de la partie de patte extérieure (12) et qui est séparée par ailleurs de celle-ci par une fente et présente à l'autre extrémité un bord d'appui (15).

8. Installation de guidage de conduites selon la revendication 7, **caractérisée en ce que** la zone de bord en forme de bande formant l'élément d'appui (9), comme le reste de la zone de bord de la partie de patte extérieure (12) orientée vers la patte latérale voisine, est courbée en forme de segment de cercle dans le plan de la patte.

9. Installation de guidage de conduites selon la revendication 8, **caractérisée en ce que** l'extrémité de la zone en forme de bande formant le bord d'appui (15) passe dans l'axe longitudinal médian de la patte latérale (3).

10. Installation de guidage de conduites selon la revendication 8 ou 9, **caractérisée en ce que** l'extrémité de la zone de bord en forme de bande formant l'élément d'appui (9) qui est reliée au reste de la partie de patte extérieure (12) est disposée dans le rayon du segment de cercle perpendiculaire à l'axe longitudinal médian de la patte latérale (3).

11. Installation de guidage de conduites selon l'une des revendications 8 à 10, **caractérisée en ce que** la saillie est conformée comme une bande courbée en forme de segment de cercle avec une surface de contact (16) montante en direction de l'axe longitudinal médian de la patte latérale (3).

12. Installation de guidage de conduites selon l'une des revendications 7 à 11, **caractérisée en ce que** la zone de bord (17) de la partie de patte extérieure (12) faisant suite au bord d'appui (15) de la zone de bord en forme de bande formant l'élément d'appui (9) présente sur sa face intérieure un creux (18) ouvert en direction du bord d'appui (15), la paroi latérale (19) du creux (18) tournée à l'opposé du bord d'appui (15) formant une surface de butée pour la saillie afin de limiter le pivotement des maillons (2) voisins dans la position angulée.

13. Installation de guidage de conduites selon l'une des revendications 3 à 12, **caractérisée en ce que** sont disposées sur les parties de patte intérieures (13) des surfaces de butée (21, 22) qui coopèrent avec des butées (23) sur la face intérieure des parties de patte extérieures (12) afin de limiter le pivotement des maillons (2) voisins dans la disposition sensiblement linéaire et/ou la position angulée.

14. Installation de guidage de conduites selon l'une des revendications 1 à 13, **caractérisée en ce que** les maillons (2) présentent des pattes latérales (3) coudées avec des parties de patte coudées vers l'intérieur (13) et des parties de patte coudées vers l'extérieur (12) et les éléments d'appui (9) sont disposés sur les parties de patte coudées vers l'extérieur (12) et le dispositif de réglage (11) sur les parties de patte coudées vers l'intérieur (13).

15. Installation de guidage de conduites selon l'une des revendications 1 à 13, **caractérisée en ce que** les maillons (2) présentent alternativement des pattes extérieures disposées sur l'extérieur et des pattes intérieures disposées sur l'intérieur et les éléments d'appui (9) sont disposés sur les pattes extérieures et le dispositif de réglage (11) sur les pattes intérieures.

16. Système composé d'une installation de guidage de conduites (1) selon l'une des revendications 1 à 15 et d'un dispositif de maintien (28) pour le brin supérieur (8) de l'installation de guidage de conduites (1), **caractérisé en ce que** le dispositif de maintien (28) présente un canal (29) qui s'étend dans le sens longitudinal du brin supérieur (8) avec une première zone (30) dont la largeur correspond avec un faible jeu à la largeur des maillons (2) dont les éléments d'appui (9) sont orientés vers l'extérieur et avec une deuxième zone (31) élargie en gradins disposée au-dessus de celle-ci, dont la largeur correspond au moins à la largeur des maillons (2) dont les éléments d'appui (9) sont orientés vers l'extérieur, de sorte que les éléments d'appui (9) peuvent s'appuyer sur le gradin (32) de l'élargissement des deux côtés des maillons (2).

17. Système selon la revendication 16, **caractérisé en ce que** le dispositif de maintien (28) reçoit aussi le brin inférieur (6) de l'installation de guidage de conduites (1) dans un canal (34) qui s'étend dans le sens longitudinal du brin inférieur (6) avec des zones de paroi inférieures (35) orientées vers l'intérieur, sur lesquelles les maillons (2) du brin inférieur (6) s'appuient au moins avec des zones latérales de leur côté inférieur, et avec une largeur qui correspond au moins à la largeur des maillons (2) dont les éléments d'appui (9) sont orientés vers l'extérieur.

18. Système selon la revendication 17, **caractérisé en ce que** le dispositif de maintien (28) est conformé comme une gouttière dans laquelle sont intégrés le canal supérieur (29) pour le brin supérieur (8) et le canal inférieur (34) pour le brin inférieur (6), la première zone (30) du canal supérieur (29) s'étendant jusqu'au canal inférieur (34) et le canal inférieur (34) présentant un élargissement en gradins par rapport à la première zone (30).

19. Système selon la revendication 18, **caractérisé en ce que** le dispositif de maintien (28) est conformé comme un profilé d'une pièce.

20. Système selon la revendication 18 ou 19, **caractérisé en ce que** le dispositif de maintien (28) présente sur son côté étroit supérieur ou inférieur une ouverture (36) s'étendant dans le sens longitudinal pour le passage d'une entraîneur pour le raccord mobile (33) de l'installation de guidage de conduites (1), qui est relié soit avec un brin inférieur (6) capable de translation en va-et-vient, soit avec un brin supérieur (8) capable de translation en va-et-vient de l'installation de guidage de conduites (1).

21. Système selon la revendication 20, **caractérisé en ce que** le dispositif de maintien (28) présente sur le côté étroit faisant face au côté étroit qui présente l'ouverture (36) une partie de fixation (37) avec laquelle le dispositif de fixation (28) peut être fixé à une surface passant sur son côté et/ou une surface qui lui est perpendiculaire.

22. Système selon l'une des revendications 16 à 21, **caractérisé en ce que** la deuxième zone (31) du canal (29) pour le brin supérieur (8) présente une largeur qui correspond avec un faible jeu à la largeur des maillons (2) dont les éléments d'appui (9) sont orientés vers l'extérieur.

23. Système selon l'une des revendications 17 à 22, **caractérisé en ce que** le canal (34) pour le brin inférieur (6) possède une largeur qui correspond avec un faible jeu à la largeur des maillons (2) dont les éléments d'appui (9) sont orientés vers l'extérieur.
